# EUROPÄISCHE PATENTSCHRIFT

(11) **EP 1 284 098 B1**
(45) Veröffentlichungstag und Bekanntmachung des Hinweises auf die Patenterteilung: **22.11.2006**
(21) Anmeldenummer: 02016682.3
(22) Anmeldetag: 26.07.2002
(51) Int. Cl.: A01F 7/06

(54) **Landwirtschaftliche Erntemaschine mit Axialtrennvorrichtung**
Agricultural harvesting machine with axial flow separator
Récolteuse à dispositif séparateur à écoulement axial

(30) Priorität: 10.08.2001 DE 10139539
(43) Veröffentlichungstag der Anmeldung: 19.02.2003
(73) Patentinhaber: CLAAS Selbstfahrende Erntemaschinen GmbH, 33428 Harsewinkel (DE)
(72) Erfinder: Schwersmann, Berthold, 49186 Bad Iburg (DE); Gogolin, Gregor, 48157 Münster (DE)

(56) Entgegenhaltungen:
- EP-A- 0 281 383
- GB-A- 2 053 644
- US-A- 4 222 395
- US-A- 4 869 272
- US-A- 5 334 093
- US-A- 5 454 758

## Beschreibung

Die Erfindung betrifft eine landwirtschaftliche Erntemaschine mit Mitteln zum Lösen der Fruchtstände aus landwirtschaftlichem Erntegut und zum Abscheiden der Fruchtstände aus dem Erntegut gemäß dem Oberbegriff des Anspruchs 1.

Eine gattungsgemäße landwirtschaftliche Erntemaschine ist in der EP 0 591 688 offenbart. Einem ein- oder mehrtrommelig ausgeführten Dreschwerkwerk sind in seinem rückwärtigen Bereich ein oder zwei in Längsrichtung des Mähdreschers weisende sogenannte Axialtrennrotoren zugeordnet. Jeder der Axialtrennrotoren nimmt in seinem Inneren einen umlaufenden, auf seinem Umfang mit beliebig ausgeführten Mitnahmeelementen versehenen Rotor auf der zumindest in seinem untenseitigen Bereich mit einem den Rotor wenigstens teilweise ummantelnden, gestellfesten Abscheidekorb zusammenarbeitet. Obenseitig wird der Rotor von Hüllflächen in der Weise umschlossen, dass sich zwischen dem Rotor, dem Abscheidekorb und diesen Hüllflächen ein Durchgangsspalt ergibt, durch den das landwirtschaftliche Erntegut auf spiralförmigen Bahnen entlang der Rotorachse durch den Axialtrennrotor gefördert wird. Während dieses Fördervorganges kommt es zu einer Entmischung des durch den Axialtrennrotor geförderten Korn-Stroh-Gemisches, wobei durch die in die Abscheidekörbe eingearbeiteten Öffnungen Körner und in nicht unerheblichem Maß Kurzstroh und Spreu abgeschieden werden. Vor allem im vorderen Bereich des Axialtrennrotors wird ein erheblicher Teil von Kurzstroh und Spreu, sogenannten Verunreinigungen, abgeschieden, da die in dem Gutstrang befindlichen Körner zunächst durch Fliehkraftwirkung in den äußeren Randbereich des Gutstranges gefördert werden müssen, bevor sie im Bereich der Trennkörbe abscheidbar sind. Diese erhöhte Beimengungsabscheidung erfordert eine intensive Reinigung des abgeschiedenen Gutgemisches in den hierfür vorgesehenen und dem Axialtrennrotor nachgeordneten Reinigungssystemen in der landwirtschaftlichen Erntemaschine. Mitunter ist der Beimengungsanteil so erheblich, dass die auf der landwirtschaftlichen Erntemaschine installierten Reinigungssystem allein nicht ausreichen, um die erforderliche Reinheit des Erntegutes zu erreichen, sodass das Erntegut in stationären Reinigungseinrichtung nachgereinigt werden muss. Dies führt zu einem erheblichen Mehraufwand, der die Kosten für das Ernteverfahren deutlich erhöht.

Aus dem umfangreichen Stand der Technik sei ferner auf die US 4,869,272 verwiesen, die einen sogenannten Axialflussmähdrescher offenbart. Der Axialflussdresch- und -trennrotor nimmt in seinem Inneren ebenfalls einen um seine Längsachse umlaufenden Rotor auf. Gegenüber der EP 0 591 688 übernimmt hier der Rotor sowohl die Funktion des Ausdreschens als auch Abscheidens der Fruchtstände aus dem durch den Rotor geförderten Erntegutes. Hierfür ist der vordere Bereich des Rotors als sogenannter Dreschbereich und der daran anschließende rückwärtige Bereich des Rotors als sogenannter Trennbereich ausgebildet. Sowohl der Dreschbereich als auch der Trennbereich werden obenseitig von Mantelflächen umhüllt, die im unteren Bereich des Rotors in Dresch- und Abscheidekörbe übergehen, durch die ebenfalls wieder ein Korn-Stroh-Gemisch abgeschieden wird. Auch hier tritt am Anfang des Trennbereichs der Effekt auf, dass die im Gutstrang eingebetteten Körner zunächst in den äußeren Bereich des spiralförmig umlaufenden Gutstranges bewegt werden müssen, bevor sie durch die Öffnungen der Abscheidekörbe hindurchtreten können. Dies führt auch bei Axialflussmähdreschern dazu, dass am Anfang des Trennbereiches ein erheblich höherer Anteil von Beimengungen abgeschieden wird, der häufig dazu führt, dass die nachgeordneten Reinigungsorgane überlastet werden.

Der Erfindung liegt deshalb die Aufgabe zugrunde, landwirtschaftliche Erntemaschinen der eingangs genannten Art so weiterzubilden, dass die beschriebenen Nachteile des Standes der Technik vermieden werden und das in den jeweiligen Trennbereichen abgeschiedene Erntegut gegenüber herkömmlichen Einrichtungen einen reduzierten Beimengungsanteil aufweist.

Erfindungsgemäß wird die Aufgabe durch eine landwirtschaftliche Erntemaschine mit den kennzeichnenden Merkmalen des Anspruchs 1 gelöst.

Indem dem wenigstens einen Axialtrennrotor eine Abscheidefläche zugeordnet ist, deren frühester Abscheidebereich in Achsrichtung des wenigstens einen Axialtrennrotors verschoben werden kann, wird sichergestellt, dass die Abscheidung erst dann beginnt, wenn ein entsprechend großer Anteil Körner im äußeren Bereich des umlaufenden Erntegutstranges angeordnet ist, sodass der durch den Axialtrennrotor abgeschiedene Beimengungsanteil gering bleibt.

Im einfachsten Fall kann die Verschiebung dieses frühesten Abscheidebereichs dadurch erzielt werden, dass die den Axialtrennrotor ummantelnde Abscheidefläche zumindest teilweise verschlossen wird.

Eine besonders vorteilhafte Wirkung der Erfindung wird dann erzielt, wenn der einem Tangentialdreschwerk zugeordnete Axialtrennrotor oder der Trennbereich eines Axialflussdresch- und -trennrotors in erfindungsgemäßer Weise ausgebildet ist.

In besonders einfacher Weise kann das teilweise Verschließen der Trennfläche dadurch erreicht werden, dass die Abscheidefläche segmentiert ausgeführt ist und die Segmente der Trennfläche aufeinanderfolgend, beginnend im Guteintrittsbereich der Trennfläche verschlossen und in umgekehrter Reihenfolge geöffnet werden können.

In vorteilhafter Weiterbildung der Erfindung kann die Abscheidefläche in Umfangsrichtung des wenigstens einen Axialtrennrotors eine Vielzahl schwenkbarer Schließklappen aufnehmen, die jede für sich genommen nur einen Teil der Abscheidefläche verschließen kann, im Zusammenwirken mit ihr benachbarten Schhließklappen jedoch eine vollständige Abdeckung der Abscheidefläche ermöglicht. Auf diese Weise wird sichergestellt, dass die einzelnen Klappen zum Verschwenken zwischen ihrer Öffnungs- und Schließposition bauraumsparend nur eine geringen Freiraum benötigen.

In vorteilhafter Weiterbildung der Erfindung können mehrere derartige Schließklappen in Achsrichtung des Axialtrennrotors angeordnet sein, sodass auf konstruktive einfache Weise die Verschiebung des frühesten Abscheidebereiches realisierbar ist.

Um die Verstellung der Schließklappen zu vereinfachen, können in einer weiteren vorteilhaften Ausgestaltung der Erfindung die in Umfangsrichtung des Axialtrennrotors einander benachbart angeordneten Schließklappen über ein Koppelglied schwenkbeweglich miteinander verbunden sein, sodass eine einzige Verstellbetätigung alle miteinander verbundenen Schließklappen gleichzeitig verschwenkt.

Um eine Vielzahl von nacheinander angeordneten Schließklappen auf konstruktiv einfache Weise in der richtigen Reihenfolge verschließen und öffnen zu können, sind in vorteilhafter Weiterbildung der Erfindung die Schließklappen über einen gemeinsamen Schwenkmechanismus miteinander verbunden.

Auf konstruktiv besonders einfache Weise kann das aufeinanderfolgende Öffnen und Schließen der Schließklappen dadurch erreicht werden, dass die Koppelglieder der Schließklappen in verschiebbaren Kurvenbahnen geführt sind, wobei die Form der Kurvenbahnen dafür sorgt, dass ein Verschließen der Schließklappen am Anfang des Axialtrennrotors und das Öffnen der Schließklappen bei den dem Rotorende nächstgeordneten Schließklappen beginnt. Auf besonders einfache Weise kann diese axiale Verschiebung durch an sich bekannte Verstellmittel erfolgen, die über zumindest eine Koppelstange mit den Schlitzführungen in Wirkverbindung stehen.

In vorteilhafter Weiterbildung der Erfindung können die Schlitzführungen auch um eine in Achsrichtung des wenigstens einen Axialtrennrotors weisende Achse schwenkbeweglich angeordnet sein, wobei die Form der Schlitzführungen wiederum die erfindungsgemäße Reihenfolge des Öffnens und Schließens der Schließklappen gewährleistet. Eine derartige Anordnung der Schlitzführungen kann zu einer erheblichen Reduzierung der erforderlichen Verstellwege und damit zu einer Bauraumeinsparung führen.

In einer weiteren vorteilhaften Ausgestaltung der Erfindung können den Koppelgliedern der Schließklappen auch voneinander unabhängige Verstellmittel zugeordnet sein, die zur Erreichung flexiblerer Verstellmöglichkeiten auch unabhängig voneinander betätigbar sind.

Sind der landwirtschaftlichen Erntemaschine wenigstens zwei Axialtrennrotoren zugeordnet, so können der oder die Verstellmittel und der oder die zugehörigen Verstellmechanismen auf konstruktiv einfache Weise im Zwischenraum zwischen diesen Axialtrennrotoren angeordnet sein, sodass deren Verschmutzung durch umherwirbelnde Partikel erheblich reduziert wird.

Damit das durch die Abscheidefläche hindurchtretende Erntegut in seiner Bewegung nicht durch die geöffneten Schließklappen behindert wird, können in einer weiteren vorteilhaften Ausgestaltung der Erfindung benachbarte Schließklappen einen solchen Schwenkbereich aurweisen, dass sie zwischen sich einen Bereich aufspannen, der im Querschnitt die Form eines sich in radialer Richtung öffnenden Trichters aufweist.

Da die Beimengungsabscheidung sehr stark von den Ernteguteigenschaften wie Feuchtigkeit, Bruchverhalten, Korngröße abhängt, kann es von Vorteil sein, wenn sich die Verschiebung des frühesten Abscheidebereichs in Abhängigkeit von der Beimengungsabscheidung in diesem frühesten Abscheidebereich ändert.

Eine besonders vorteilhafte Ausgestaltung der Erfindung wird dann erreicht, wenn die Verschiebung des frühesten Abscheidebereichs in Abhängigkeit von der Beimengungsabscheidung selbsttätig erfolgt, wobei mittels an sich bekannter Sensoren der Beimengungsanteil bestimmt und über eine Steuer- und Auswerteinheit ein Stellsignal generiert wird, welches die erfindungsgemäßen Schließklappen entweder öffnet oder schließt.

Weitere vorteilhafte Ausgestaltungen sind Gegenstand weiterer Unteransprüche und werden nachfolgend anhand von Zeichnungen näher erläutert.

Es zeigen:
- Figur 1: die schematische Seitenansicht eines Mähdreschers mit Tangentialdreschwerk und Axialtrennrotor
- Figur 2: eine Schnittdarstellung gemäß Linie II-II in Figur 1 mit in Öffnungsstellung befindlichen Schließklappen
- Figur 3: eine Schnittdarstellung gemäß Linie II-II mit in Schließstellung befindlichen Schließklappen
- Figur 4: eine Detailansicht des Axialtrennrotors nach Figur 1

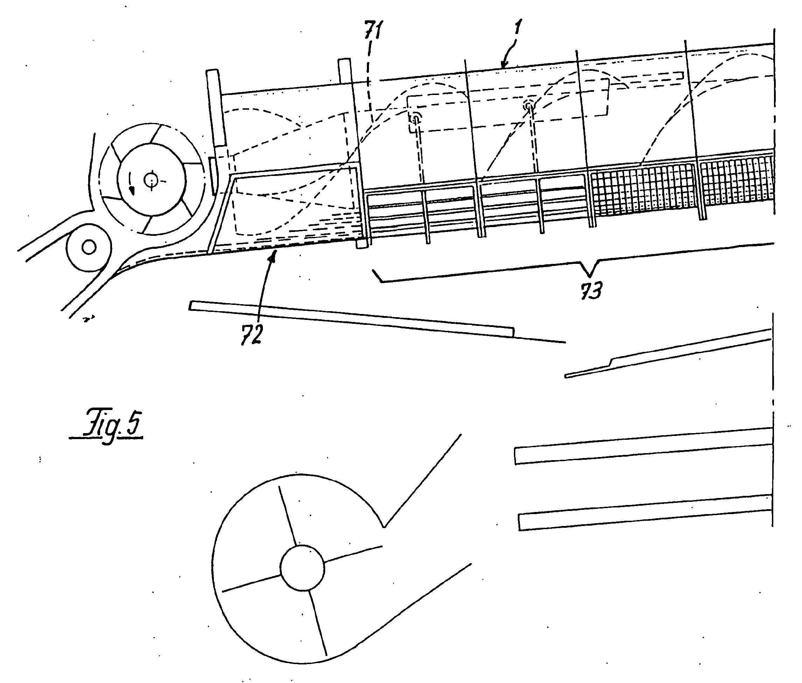

- Figur 5: die schematische Seitenansicht eines Mähdreschers mit Axialdresch- und-trennrotor
- Figur 6: eine weitere Schnittdarstellung gemäß Linie II-II in Figur 1 mit einer weiteren Ausführung des erfindungsgemäßen Schwenkmechanismus

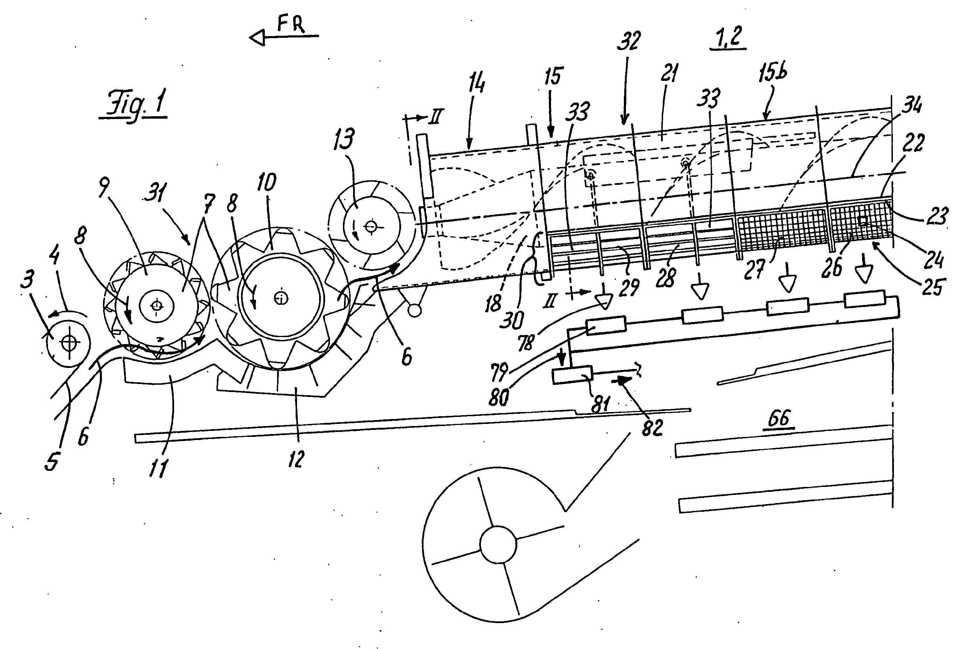

In Figur 1 ist ein schematischer Ausschnitt einer als Mähdrescher 1 ausgeführten landwirtschaftlichen Erntemaschine 2 dargestellt, die in ihrem in Fahrtrichtung FR vorn liegenden Bereich ein gemäß Pfeilrichtung 4 umlaufendes Schrägförderorgan 3 aufnimmt. Untenseitig transportiert das Fördermittel 5 des Schrägförderers 3 einen Erntegutstrom 6 den es in seinem rückwärtigen Bereich an ein Mehrtrommeldreschwerk 7 übergibt. Die gemäß Pfeilrichtung 8 umlaufenden Dreschtrommeln 9, 10 erfassen den Erntegutstrom 6 und fördern ihn entlang von beliebig ausgeführten und an sich bekannten Dreschkörben 11, 12, in den rückwärtigen Bereich des Mehrtrommeldreschwerks 7. Während dieser Förderung werden beispielsweise für den Fall, dass der Erntegutstrom 6 aus Getreide besteht die Körner aus den Ähren gelöst und zumindest teilweise an den Dreschkörben 11, 12 abgeschieden und nachfolgenden Arbeitsorganen zugeführt. Im rückwärtigen Bereich des Dreschwerkes 7 wird der Erntegutstrom 6 von einer Zuführwalze 13 erfasst, die den Erntegutstrom 6 dem Einlaufbereich 14 einer in Fahrtrichtung FR geneigt angeordneten Axialtrenneinrichtung 15 zuführt. Es liegt im Rahmen der Erfindung, dass das dargestellte Mehrtrommeldreschwerk 7 durch ein nicht dargestelltes Eintrommeldreschwerk ersetzt sein kann und an Stelle einer einrotorigen Axialtrenneinrichtung 15 dem Dreschwerk 7 auch eine zwei- oder mehrrotorige Axialtrenneinrichtungen 15a, 15b gemäß Figur 2 nachgeordnet ist. Jede Axialtrenneinrichtung 15a, b wird in ihrem Inneren von je einem gemäß der Pfeilrichtungen 16, 17 umlaufenden Axialtrennrotor 18 durchsetzt, dessen Umfangsfläche 19 von beliebig gestalteten in Spiralform die Umfangsfläche 19 umspannenden Mitnahmeelementen 20 umschlungen wird. Obenseitig wird jeder Axialtrennrotor 18 von Abdeckhauben 21 ummantelt. Den Abdeckhauben 21 sind an ihren untenseitigen Enden Montageschienen 22 angeformt, die lösbar beliebig gestaltet Rahmenkonstruktionen 23 aufnehmen. In an sich bekannter Weise nehmen diese Rahmenkonstruktionen 23 ebenfalls lösbar eine von Durchtrittsöffnungen 24 durchsetzte Abscheidefläche 25 auf, wobei in an sich bekannter Weise die Abscheidefläche 25 aus einer Vielzahl von Segmenten 26-29 zusammengesetzt sein kann und die Segmente 26-29 der Abscheidefläche 25 in Wirkverbindung mit der Rahmenkonstruktion 23 den sogenannten Abscheidekorb 30 bilden. In der gemäß Figur 1 ausgeführten landwirtschaftlichen Erntemaschine 2 definieren das Mehrtrommeldreschwerk 7 den Dreschbereich 31 und der Axialtrenneinrichtung 15 den Trennbereich 32.

In erfindungsgemäßer Weise sind dem in Fahrtrichtung FR vorn liegenden ersten und zweiten Segment 28, 29 der Abscheidefläche 25 Schließklappen 33 in noch näher zu beschreibender Weise zugeordnet. Gemäß Figur 2 erstrecken sich die Schließklappen 33 eines Segments 28, 29 in Umfangsrichtung des von ihnen umgebenen Axialtrennrotors 18. Einenends sind die Schließklappen 33 um in Achsrichtung 34 des Axialtrennrotors 18 weisende Achsen 35 schwenkbar an der Rahmenkonstruktion 23 des Abscheidekorbs 30 befestigt. Obenseitig ist jeder Schließklappe 33 eine Verschlussfläche 36 angeformt. In dem der Verschlussfläche 36 abgewandten Bereich wird jede Schließklappe 33 von einer weiteren in Achsrichtung 34 des Axialtrennrotors 18 weisenden Schwenkachse 37 durchsetzt. Jede dieser Schwenkachsen 37 eines Segments 28, 29 der Abscheidefläche 25 wird drehfest von einem bogenförmigen Koppelglied 38 aufgenommen, wobei das bogenförmige Koppelglied 38 ein oder mehrere Führungsbolzen 39 drehfest aufnimmt. Zumindest den in Fahrtrichtung FR vorn liegenden Segmenten 28, 29 der Abscheidefläche 25 sind neben den seitlich angeformten Versteifungstreben 40 je eine weitere Versteifungsstrebe 41 mittig zugeordnet, die von Schlitzführungen 42 durchsetzt werden. In diese Schlitzführungen 42 greifen die den Koppelgliedern 38 angeformten Führungsbolzen 39 ein, sodass die Koppelglieder 38 in Abhängigkeit von der Länge der Schlitzführungen 42 eine Schwenkbewegungen gemäß Pfeilrichtung 43 um die ihr zugeordneten Bereiche der Abscheidefläche 25 ausführen können.Damit dies möglich wird, werden die bogenförmigen Koppelglieder 38 einenends von Bolzen 44 schwenkbeweglich durchsetzt, die wiederum im einfachsten Fall von Gabelköpfen 45 gelenkig aufgenommen werden. An ihren den Bolzen 44 abgewandten Seiten verfügen die Gabelköpfe 45 über stabförmige Verlängerungen 46 denen anderenends ein Kugelkopf 47 angeformt ist. Jeder der Kugelköpfe 47 steht mit einem kugelkopfförmigen Bolzen 48 in Wirkverbindung. Jeder dieser kugelkopfförmigen Bolzen 48 wird an seinem dem Kugelkopf 47 abgewandtem Ende von Schlitzführungen 49, 50 aufgenommen, wobei die Schlitzführungen 49, 50 im einfachsten Fall in ein Flanschblech 51 eingearbeitet sind. Obenseitig ist dem Flanschblech 51 ein Hohlprofilstab 52 angeformt, der in nicht näher dargestellter Weise von einem Zuggestänge 53 durchsetzt wird und mit diesem Zuggestänge 53 fest verbunden ist. Das Zuggestänge 53 ist an einer Stelle mittels Gleitbuchse 54 in nicht näher dargestellter Weise an der landwirtschaftlichen Erntemaschine 1 gelagert. An seinem dem Flanschblech 51 abgewandten Ende ist das Zuggestänge 53 über einen Bolzen 55 schwenkbeweglich mit einem Schwenkhebel 56 verbunden, wobei der Schwenkhebel 56 über einen weiteren Bolzen 57 im einfachsten Fall über einen Halteflansch 58 drehbar mit der Rahmenkonstruktion 23 der Abscheidefläche 25 verbunden ist. Damit der Schwenkhebel 56 eine Schwenkbewegung um den von dem Halteflansch 58 aufgenommenen Bolzen 55 ausführen kann, greift an dem Schwenkhebel 56 im dargestellten Ausführungsbeispiel die Kolbenstange 59 eines Hubzylinders 60 an. Es liegt im Rahmen der Erfindung, dass der Hubzylinder 60 durch ein beliebiges Verstellmittel 61 ersetzt sein kann, welches eine Bewegung des Schwenkhebels 56 um den vom Halteflansch 58 aufgenommenen Bolzen 55 ermöglicht.

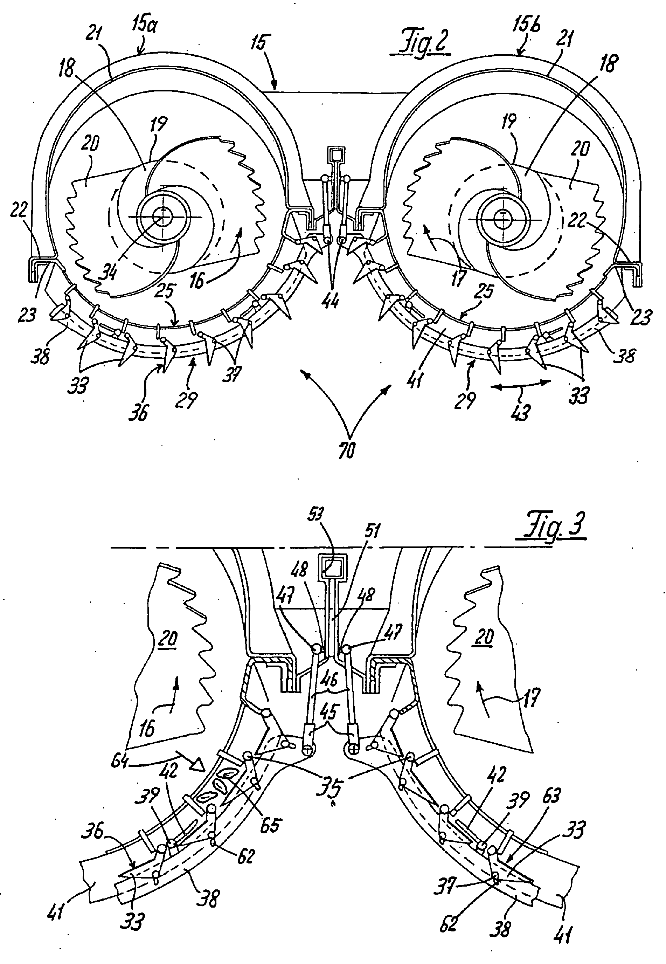

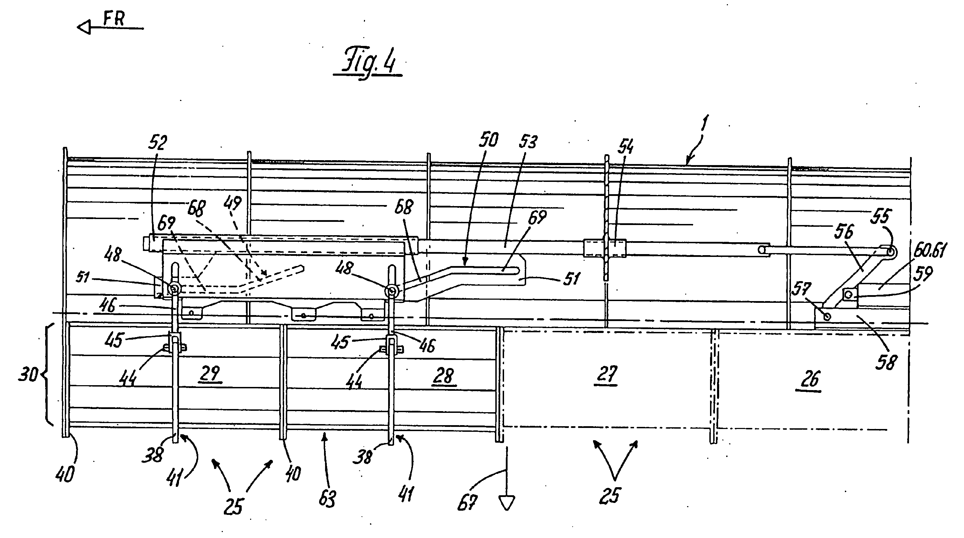

In der in Figur 4 dargestellten Position befindet sich die Kolbenstange 59 in einer in den Hubzylinder 60 eingefahrenen Stellung. In dieser Lage hat der mit der Kolbenstange 59 gelenkig verbundene Schwenkhebel 56 das Zuggestänge 53 soweit in Richtung des rückwärtigen Endes der Axialtrenneinrichtung 15 verschoben, dass die die Schlitzführungen 49, 50 des Flanschblechs 51 durchsetzenden Bolzen 48 am in Fahrtrichtung FR vorn liegenden Ende der Schlitzföhrungen 49, 50 anliegen. In dieser Stellung befinden sich die Bolzen 48 in ihrer in vertikaler Richtung tiefsten Position innerhalb der Schlitzführungen 49, 50. In dieser Position nehmen auch die die Koppelglieder 38 mit den Schlitzführungen 49, 50 verbindenden Verlängerungen 46 ihre vertikal tiefste Lage ein, was gemäß Figur 3 dazu führt, dass die Koppelglieder 38 in einer Position gehalten werden, in der die ihnen zugeordneten Führungsbolzen 39 am untenseitigen Ende ihrer Schlitzführungen 42 anliegen. Jedes Koppelglied 38 steht über Schwenkachsen 37 mit den jeweiligen Schließklappen 33 in Wirkverbindung, wobei jede dieser Schwenkachsen 37 in die Koppelglieder 38 eingearbeitete Langlöcher 62 durchsetzt. Dies ist notwendig, damit die die Koppelglieder 38 durchsetzenden Schwenkachsen 37 beim Verschwenken der Koppelglieder 38 auftretende Längenänderungen ausgleichen können. Befindet sich das Koppelglied 38 in der in Figur 3 gezeigten Position, haben die über Schwenkachse 37 mit dem Koppelglied 38 verbundenen Schließklappen 33 eine Schwenkbewegung um die sie mit der jeweiligen Versteifungsstrebe 41 der Abscheidefläche 25 gelenkig verbindenden Achsen 35 in Richtung der Abscheidefläche 25 ausgeführt und befinden sich in ihrer sogenannten Schließstellung 63. In dieser Schließstellung 63 sind die in radialer Richtung einander benachbarten Schließklappen 33 soweit in Richtung der Abscheidefläche 25 verschwenkt, dass durch die Durchtrittsöffnungen 24 gemäß Pfeilrichtung 64 hindurchtretendes Erntegut 65 diesen Bereich nicht in Richtung nachgeordneter Arbeitsorgane, wie beispielsweise eine an sich bekannte und deshalb nicht näher beschriebene Reinigungseinrichtung 66 verlassen kann. Die Geometrie der Schließklappen 33 ist so bemessen, dass benachbarte Schließklappen 33 zwischen sich allenfalls einen so geringen Abstand zueinander aufweisen, der ein Abscheiden von Erntegut 65 in der Schließstellung 63 unmöglich macht. Durch Verschwenken der Schließklappen 33 in diese Schließstellung 63 wird in erfindungsgemäßer Weise erreicht, dass der früheste Abscheidebereich 67 (Fig. 4) in Achsrichtung 34 des wenigstens einen Axialtrennrotors 18 verschoben werden kann. In Abhängigkeit von der Anzahl der in Achsrichtung 34 des wenigstens einen Axialtrennrotors 18 aufeinanderfolgend angeordneten Schließklappen 33 und den ihnen jeweils in radialer Richtung zugeordneten weiteren Schließklappen 33 kann somit die Länge der maximal verschließbaren Abscheidefläche 25 vordefiniert werden.

Wird nun der in Fig. 4 dargestellte Hubzylinder 60 so druckbeaufschlagt, dass die Kolbenstange 59 aus dem Hubzylinder 60 herausbewegt wird, verschiebt sich zugleich das über den Schwenkhebel 56 mit der Kolbenstange 59 in Wirkverbindung stehende Zuggestänge 53 zum frontseitigen Ende der Axialtrenneinrichtung 15. In dem dargestellten Ausführungsbeispiel nach Fig. 4 sind einem ersten Segment 29 und einem zweiten Segment 28 des Abscheidekorbs 30 verschwenkbare Schließklappen 33 zugeordnet, wobei die an den Koppelgliedern 38 angreifenden Verlängerungen 46 von unterschiedlich geformten Schlitzführungen 49, 50 aufgenommen werden. Indem das Zuggestänge 53 zum frontseitigen Ende der Axialtrenneinrichtung 15 bewegt wird, verschieben sich auch diese in das mit dem Zuggestänge 53 fest verbundene Flanschblech 51 eingearbeiteten Schlitzführungen 49, 50 in diese Richtung. Dabei durchläuft der die rückwärtigere Schlitzführung 50 durchsetzende Bolzen 48 zunächst einen in vertikaler Richtung ansteigenden Bereich 68, wobei die Schließklappen 33 über die bereits beschriebenen Koppelglieder 38 und Verlängerungen 46 von der Schließstellung 63 in die Durchlassstellung 70 gemäß Figur 2 verschwenken. In dieser Durchlassstellung 70 kann das durch die Abscheidefläche 25 hindurchtretende Erntegut 65 nun ungehindert weiteren Arbeitsorganen zugeführt werden. Während die Schließklappen 33 des rückwärtigen Segments 28 die beschriebene Schwenkbewegung ausführen, verharren die Schließklappen 33 des vorgeordneten Segments 29 in der Schließstellung 63, da der die vordere Schlitzführung 49 durchsetzende und die Bewegung der Schließklappen 33 auslösende Bolzen 48 in einem horizontalen Bereich 69 dieser Schlitzführung 49 bewegt wird, sodass zunächst nur die Schließklappen 33 des rückwärtigen Segments 28 öffnen.

Wird die Kolbenstange 59 nun weiter aus dem Hubzylinder 60 herausgeschoben, gelangt der die Schwenkbewegung der Schließklappen 33 des vorgeordneten Segments 29 bewirkende Bolzen 48 nun auch in einen vertikal ansteigenden Bereich 68 der vorderen Schlitzführung 49, während der Bolzen 48 des nachgeordneten Segments 28 nun einen horizontalen Bereich 69 der hinteren Schlitzführung 50 durchläuft. Auf diese Weise werden nun auch die Schließklappen 33 des vorgeordneten Segments 29 in der bereits beschriebenen Weise von der Schließstellung 63 in die Durchlassstellung 70 verschwenkt.

Wird nun die Druckbeaufschlagung des Hubzylinders 60 so geändert, dass die Kolbenstange 59 in den Hubzylinder 60 hineingeschoben wird, verschwenken die Schließklappen 33 der Segmente 28, 29 in umgekehrter Reihenfolge. Auf diese Weise verschwenken zunächst die Schließklappen 33 des in Fahrtrichtung FR vorn liegenden Segments 29 von der Durchlassstellung 70 in die Schließstellung 63 und erst wenn diese Schwenkbewegung abgeschlossen ist bewegen sich auch die Schließklappen 33 des nachgeordneten Segments 28 von der Durchlassstellung 70 in die Schließstellung 63.

Es liegt im Rahmen der Erfindung, dass abweichend vom dargestellten Ausführungsbeispiel eine Vielzahl von Schließklappen 33 in Achsrichtung 34 der Axialtrenneinrichtung 15 angeordnet sein können, wobei dann die Längen der einzelnen Bereiche 68, 69 der Schlitzführungen 49, 50 an die neuen geometrischen Bedingungen angepasst werden müssen. Zudem können die den Segmenten 28, 29 mittig zugeordneten Koppelglieder 38 auch an einer beliebigen Stelle im Bereich der Segmente 28, 29 angeordnet sein, um den Schließklappen 33 die durch die Gestalt der Schlitzführungen 49, 50 bestimmte Bewegung aufzuzwingen.

Weiter liegt es Rahmen der Erfindung, dass die am Beispiel einer einem Mehrtrommeldreschwerk 7 nachgeordneten Axialtrenneinrichtung 15 beschriebene Erfindung auch auf sogenannte Axialdresch- und -trennrotoren 71 angewendet werden kann. Derartige Axialdresch- und -trennrotoren 71 sind in der Regel in einen Dreschbereich 72 und einen Trennbereich 73 unterteil, wobei Aufbau und Funktion des Trennbereichs 73 im Wesentlichen dem Aufbau und der Funktion des bereits beschriebenen Trennbereichs 32 einer Axialtrenneinrichtung 15 entspricht, sodass bezüglich der Übertragung der Erfindung auf Axialdresch- und -trennrotoren 71 die bereits beschriebene Ausführung zutrifft.

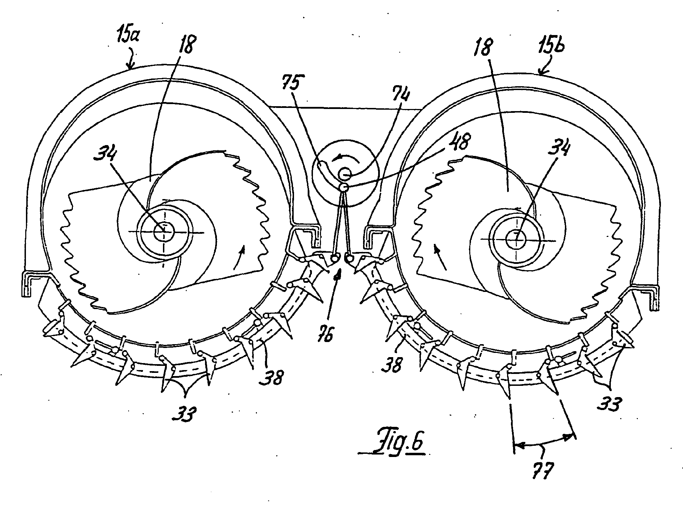

Wie in Figur 6 schematisch dargestellt können die die Schwenkbewegung der Schließklappen 33 auslösenden Schlitzführungen 49, 50 auch als um eine in Achsrichtung 34 des oder der Axialtrennrotoren 18 weisende Achse 74 umlaufende Schlitzführungen 75 ausgeführt sein, wobei der diese Schlitzführungen 75 durchsetzende Bolzen 48 mittels eines Koppelmechanismus 76 wiederum die von den Schlitzführungen 75 definierte Bewegung auf die Koppelglieder 38 der Schließklappen 33 überträgt. Eine derartige Ausführung benötigt einen geringeren Bauraumbedarf, da Mittel zur Wandlung einer Linearbewegung in eine Drehbewegung entfallen können.

Es liegt im Rahmen der Erfindung, das den Schließklappen 33 eines Segmentes 28, 29 der Abscheidefläche 25 separate Verstellmittel 61 zugeordnet sind, deren Betätigung so aufeinander abgestimmt sein kann, dass die Schließklappen 33 in erfindungsgemäßer Weise so verschwenken, dass eine Verschiebung des frühesten Abscheidebereiches 67 in Achsrichtung 34 des oder der Axialtrenneinrichtungen 15 möglich wird.

Damit das durch die Abscheidefläche 25 hindurchtretende Erntegut 65 nicht von den in Durchlassstellung 70 befindlichen Schließklappen 33 behindert wird, sind die Schließklappen 33 so geformt, dass benachbarte Schließklappen 33 in Durchlassstellung 70 zwischen sich einen Durchlassbereich 77 (Fig. 6) aufspannen, der sich in radialer Richtung von der Abscheidefläche 25 wegweisend trichterförmig öffnet.

In einer weitern vorteilhaften Ausführung kann dem durch die Abscheideflächen 25 hindurchtretenden Erntegutstrom 78 eine oder mehrere Sensoreinheiten 79 zugeordnet sein, die die Beimengungsabscheidung an der Abscheidefläche 25 sensieren und das oder die sensierten Messsignale 80 einer Steuereinheit 81 zuführen. In der Steuereinheit 81 wird in Abhängigkeit von dem Eingangssignal 80 ein Aussgangssignal 82 generiert, welches zu einer selbsttätigen Verstellung des frühesten Abscheidebereiches 67 der Abscheidefläche 25 führt. Im einfachsten Fall kann dieses Ausgangssignal 82 die Druckbeaufschlagung des wenigstens einen als Hubzylinder 60 ausgeführten Verstellmittels 61 regeln, sodass sich die Schließklappen 33 selbsttätig in erfindungsgemäßer Weise öffnen oder schließen. Die Regelung des Schließens oder Öffnens der Schließklappen 33 wird hierbei grundsätzlich so auszuführen sein, dass mit zunehmendem Beimengungsanteil in dem an der Abscheidefläche 25 abgeschiedenen Erntegutstrom 78 eine größere Anzahl von Schließklappen 33 geschlossen wird, während bei sinkendem Anteil von Beimengungen im abgeschiedenen Erntegutstrom 78 die Anzahl der geöffneten Schließklappen 33 zunimmt.

### Bezugszeichenliste

- 1: Mähdrescher
- 2: landwirtschaftliche Erntemaschine
- 3: Schrägförderorgan
- 4: Pfeilrichtung
- 5: Fördermittel
- 6: Erntegutstrom
- 7: Mehrtrommeldreschwerk
- 8: Pfeilrichtung
- 9: Dreschtrommel
- 10: Dreschtrommel
- 11: Dreschkorb
- 12: Dreschkorb
- 13: Zuführwalze
- 14: Einlaufbereich
- 15: Axialtrenneinrichtung
- 16: Pfeilrichtung
- 17: Pfeilrichtung
- 18: Axialtrennrotor
- 19: Umfangsfläche
- 20: Mitnahmeelemente
- 21: Abdeckhaube
- 22: Montageschienen
- 23: Rahmenkonstruktion
- 24: Durchtrittsöffnungen
- 25: Abscheidefläche
- 26: Segment
- 27: Segment
- 28: Segment
- 29: Segment
- 30: Abscheidekorb
- 31: Dreschbereich
- 32: Trennbereich
- 33: Schließklappe
- 34: Achsrichtung
- 35: Achse
- 36: Verschlussfläche
- 37: Schwenkachse
- 38: Koppelglied
- 39: Führungsbolzen
- 40: Versteifungsstrebe
- 41: Versteifungsstrebe
- 42: Schlitzführung
- 43: Pfeilrichtung
- 44: Bolzen
- 45: Gabelkopf
- 46: Verlängerung
- 47: Kugelkopf
- 48: Bolzen
- 49: Schlitzführung
- 50: Schlitzführung
- 51: Flanschblech
- 52: Hohlprofilstab
- 53: Zuggestänge
- 54: Gleitbuchse
- 55: Bolzen
- 56: Schwenkhebel
- 57: Bolzen
- 58: Halteflansch
- 59: Kolbenstange
- 60: Hubzylinder
- 61: Verstellmittel
- 62: Langloch
- 63: Schließstellung
- 64: Pfeilrichtung
- 65: Erntegut
- 66: Reinigungseinrichtung
- 67: frühester Abscheidebereich
- 68: vertikaler Schlitzführungsbereich
- 69: horizontaler Schlitzführungsbereich
- 70: Durchlassstellung
- 71: Axialdresch- und -trennrotor
- 72: Dreschbereich
- 73: Trennbereich
- 74: Achse
- 75: Schlitzführung
- 76: Koppelmechanismus
- 77: Durchlassbereich
- 78: Erntegutstrom
- 79: Sensoreinheit
- 80: Messsignal
- 81: Steuereinheit
- 82: Ausgangssignal

- FR: Fahrtrichtung

## Patentansprüche

1. Landwirtschaftliche Erntemaschine mit Mittel zum Lösen der Fruchtstände aus landwirtschaftlichem Erntegut und zum Abscheiden der Fruchtstände aus dem Erntegut, wobei zumindest das Lösen der Fruchtstände aus dem Erntegut und eine teilweise Vorabscheidung in einem von Dreschorganen gebildeten Dreschbereich erfolgt und diesem Dreschbereich wenigstens ein Trennbereich zur Entmischung und Abscheidung der Fruchtstände nachgeordnet ist,
**dadurch gekennzeichnet,**
**dass** der Trennbereich (32, 73) von wenigstens einem Axialtrennrotor (18, 71) gebildet wird, wobei den wenigstens einen Axialtrennrotor (18, 71) zumindest teilweise eine Abscheidefläche (25) ummantelt, deren frühester Abscheidebereich (67) in Achsrichtung (34) des wenigstens einen Axialtrennrotors (18, 71) verschiebbar ist.

2. Landwirtschaftliche Erntemaschine nach Anspruch 1,
**dadurch gekennzeichnet,**
**dass** das Verschieben des frühesten Abscheidebereichs (67) des wenigstens einen Axialtrennrotors (18, 71) durch zumindest teilweises Verschließen der Abscheidefläche (25) erfolgt.

3. Landwirtschaftliche Erntemaschine nach einem oder mehreren der vorhergehenden Ansprüche,
**dadurch gekennzeichnet,**
**dass** der Dreschbereich (31) von einem Tangentialdreschwerk (7) und der Trennbereich (32) von dem wenigstens einen Axialtrennrotor (18) gebildet wird.

4. Landwirtschaftliche Erntemaschine nach einem oder mehreren der vorhergehenden Ansprüche,
**dadurch gekennzeichnet,**
**dass** der Dreschbereich (72) und der Trennbereich (73) von zumindest einem Axialdresch- und Trennrotor (71) gebildet werden, wobei der Trennbereich (73) von dem wenigstens einen Axialtrennrotor (18) gebildet wird.

5. Landwirtschaftliche Erntemaschine nach einem oder mehreren der vorhergehenden Ansprüche,
**dadurch gekennzeichnet,**
**dass** die den wenigstens einen Axialtrennrotor (18, 71) zumindest teilweise ummantelnde Abscheidefläche (25) in Achsrichtung (34) des wenigstens einen Axialtrennrotors (18, 71) segmentiert ausgeführt ist.

6. Landwirtschaftliche Erntemaschine nach Anspruch 5,
**dadurch gekennzeichnet,**
**dass** zumindest ein Teil der Segmente (26-29) der Abscheidefläche (25) in aufeinanderfolgender Reihenfolge verschließbar und in umgekehrter Reihenfolge öffenbar sind.

7. Landwirtschaftliche Erntemaschine nach Anspruch 6,
**dadurch gekennzeichnet,**
**dass** das aufeinanderfolgende Verschließen mehrerer Segmente (28, 29) der Abscheidefläche (25) stets bei dem dem Einlaufbereich (14) des wenigstens einen Axialtrennrotors (18, 71) benachbarten Segment (29) beginnt.

8. Landwirtschaftliche Erntemaschine nach einem oder mehreren der vorhergehenden Ansprüche,
**dadurch gekennzeichnet,**
**dass** der Abscheidefläche (25) in Umfangsrichtung des wenigstens einen Axialtrennrotors (18, 71) eine Vielzahl von schwenkbaren Schließklappen (33) einander benachbart zugeordnet sind, wobei die Schließklappen (33) in Schließstellung (63) den von den Schließklappen (33) überdeckten Bereich der Abscheidefläche (25) im Wesentlichen vollständig verschließen.

9. Landwirtschaftliche Erntemaschine nach einem oder mehreren der vorhergehenden Ansprüche,
**dadurch gekennzeichnet,**
**dass** in Achsrichtung (34) des wenigstens einen Axialtrennrotors (18, 71) eine Vielzahl von schwenkbaren Schließklappen (33) angeordnet sind, und jeder dieser schwenkbaren Schließklappen (33) in Umfangsrichtung des wenigstens einen Axialtrennrotors (18, 71) eine Vielzahl von schwenkbaren Schließklappen (33) einander benachbart zugeordnet sind, wobei die Schließklappen (33) in Schließstellung (63) den von den Schließklappen (33) überdeckten Bereich der Abscheidefläche (25) im Wesentlichen vollständig verschließen

10. Landwirtschaftliche Erntemaschine nach einem oder mehreren der vorhergehenden Ansprüche,
**dadurch gekennzeichnet,**
**dass** die in Umfangsrichtung des wenigstens einen Axialtrennrotors (18, 71) einander benachbarten Schließklappen (33) durch ein Koppelglied (38) schwenkbeweglich miteinander verbunden sind.

11. Landwirtschaftliche Erntemaschine nach einem oder mehreren der vorhergehenden Ansprüche,
**dadurch gekennzeichnet,**
**dass** die Schwenkbewegung einer Vielzahl in Achsrichtung (34) des wenigstens einen Axialtrennrotors (18, 71) aufeinanderfolgend angeordneter Schließklappen (33) über zumindest einen Schwenkmechanismus (76) in der Weise aneinander gekoppelt ist, dass die Schließklappen (33) die Trennfläche (25) vom frontseitigen Ende des wenigstens einen Axialtrennrotors (18, 71) in Achsrichtung (34) aufeinanderfolgend verschließen und in umgekehrter Reihenfolge wieder öffnen.

12. Landwirtschaftliche Erntemaschine nach einem oder mehreren der vorhergehenden Ansprüche,
**dadurch gekennzeichnet,**
**dass** die Koppelglieder (38) der in Umfangsrichtung des wenigstens einen Axialtrennrotors (18, 71) zueinander benachbart angeordneten Schließklappen (33) in Schlitzführungen (49, 50) eines Schwenkmechanismus (76) geführt werden, wobei durch Verschieben der Schlitzführungen (49, 50) des Schwenkmechanismus (76) die Koppelglieder (38) eine Schwenkbewegung in Umfangsrichtung des wenigstens einen Axialtrennrotors (18, 71) ausführen und dabei jeweils die mit ihnen verbundenen Schließklappen (33) von der Schließstellung (63) in die Durchlassstellung (70) und umgekehrt verschwenken.

13. Landwirtschaftliche Erntemaschine nach Anspruch 12,
**dadurch gekennzeichnet,**
**dass** die Schlitzführungen (49, 50) über zumindest ein Zuggestänge (53) mit wenigstens einem Verstellmittel (60, 61) verbunden sind, wobei das Verstellmittel (60, 61) die Schlitzführungen (49, 50) in Achsrichtung (34) des wenigstens einen Axialtrennrotors (18, 71) verschiebt.

14. Landwirtschaftliche Erntemaschine nach einem oder mehreren der vorhergehenden Ansprüche,
**dadurch gekennzeichnet,**
**dass** die Koppelglieder (38) der in Umfangsrichtung des wenigstens einen Axialtrennrotors (18, 71) zueinander benachbart angeordneten Schließklappen (33) in Schlitzführungen (75) eines Koppelmechanismus (76) geführt werden, wobei die Schlitzführungen (75) um eine in Achsrichtung (34) des wenigstens einen Axialtrennrotors (18, 71) verlaufende Achse (74) schwenkbar angeordnet sind und während des Verschwenkens der Schlitzführungen (75) die Schließklappen (33) von der Schließstellung (63) in die Durchlassstellung (70) und umgekehrt verschwenken.

15. Landwirtschaftliche Erntemaschine nach einem oder mehreren der vorhergehenden Ansprüche,
**dadurch gekennzeichnet,**
**dass** jedem Koppelglied (38) ein Verstellmittel (61) zugeordnet ist und die Verstellmittel (61) beliebig ansteuerbar sind.

16. Landwirtschaftliche Erntemaschine nach einem oder mehreren der vorhergehenden Ansprüche,
**dadurch gekennzeichnet,**
**dass** wenigstens ein erster Axialtrennrotor (18, 71) und zumindest ein weiterer Axialtrennrotor (18, 71) zueinander benachbart angeordnet sind und der Koppelmechanismus (76) der Schließklappen (33) im Bereich zwischen den Axialtrennrotoren (18, 71) angeordnet ist.

17. Landwirtschaftliche Erntemaschine nach einem oder mehreren der vorhergehenden Ansprüche,
**dadurch gekennzeichnet,**
**dass** die in Umfangsrichtung des wenigstens einen Axialtrennrotors (18, 71) zueinander benachbart angeordneten Schließklappen (33) in der Üffnungsstellung (63) einen Durchlassbereich (77) aufspannen, dessen Querschnitt in radialer Richtung zunimmt.

18. Landwirtschaftliche Erntemaschine nach einem oder mehreren der vorhergehenden Ansprüche,
**dadurch gekennzeichnet,**
**dass** die Verschiebung des frühesten Abscheidebereiches (67) der Abscheidefläche (25) in Abhängigkeit von der Beimengungsabscheidung an der Abscheidefläche (25) erfolgt.

19. Landwirtschaftliche Erntemaschine nach Anspruch 18,
**dadurch gekennzeichnet,**
**dass** Mittel (79) zur Sensierung der Beimengungsabscheidung im an der Abscheidefläche (25) abgeschiedenen Erntegutstrom (78) vorgesehen sind, deren Messsignal (80) in einer Steuereinheit (81) ein Ausgangssignal (82) zur selbsttätigen Verstellung des frühesten Abscheidebereiches (67) der Abscheidefläche (25) generiert.

## Claims

1. An agricultural harvester comprising means for loosening the grains from agricultural crop material and for separating the grains from the crop material, wherein at least the operation of loosening the grains from the crop material and partial preliminary separation are effected in a threshing region formed by threshing members and arranged downstream of that threshing region is at least one separating region for dissociating and separating the grain,
**characterised in that**
the separating region (32, 73) is formed by at least one axial separating rotor (18, 71), wherein the at least one axial separating rotor (18, 71) is at least partially enclosed by a separation surface (25) whose earliest separation region (67) is displaceable in the axial direction (34) of the at least one axial separating rotor (18, 71).

2. An agricultural harvester according to claim 1 **characterised in that** displacement of the earliest separation region (67) of the at least one axial separating rotor (18, 71) is effected by at least partially closing the separation surface (25).

3. An agricultural harvester according to one or more of the preceding claims **characterised in that** the threshing region (31) is formed by a tangential threshing mechanism (7) and the separating region (32) is formed by the at least one axial separating rotor (18).

4. An agricultural harvester according to one or more of the preceding claims **characterised in that** the threshing region (72) and the separating region (73) are formed by at least one axial threshing and separating rotor (71), wherein the separating region (73) is formed by the at least one axial separating rotor (18).

5. An agricultural harvester according to one or more of the preceding claims **characterised in that** the separation surface (25) which at least partially encloses the at least one axial separating rotor (18, 71) is of a segmented configuration in the axial direction (34) of the at least one axial separating rotor (18, 71).

6. An agricultural harvester according to claim 5 **characterised in that** at least some of the segments (26-29) of the separation surface (25) are closable in successive order and are openable in the reverse order.

7. An agricultural harvester according to claim 6 **characterised in that** successive closure of a plurality of segments (28, 29) of the separation surface (25) always begins with the segment (29) adjacent to the entry region (14) of the at least one axial separating rotor (18, 71).

8. An agricultural harvester according to one or more of the preceding claims **characterised in that** a plurality of pivotable closure flaps (33) are associated in mutually adjacent relationship with the separation surface (25) in the peripheral direction of the at least one axial separating rotor (18, 71), wherein the closure flaps (33) in the closed position (63) substantially completely close the region of the separation surface (25), which is covered by the closure flaps (33).

9. An agricultural harvester according to one or more of the preceding claims **characterised in that** a plurality of pivotable closure flaps (33) are arranged in the axial direction (34) of the at least one axial separating rotor (18, 71) and a plurality of pivotable closure flaps (33) are associated in mutually adjacent relationship with each of said pivotable closure flaps (33) in the peripheral direction of the at least one axial separating rotor (18, 71), wherein the closure flaps (33) in the closed position (63) substantially completely close the region of the separation surface (25) which is covered by the closure flaps (33).

10. An agricultural harvester according to one or more of the preceding claims **characterised in that** the closure flaps (33) which are mutually adjacent in the peripheral direction of the at least one axial separating rotor (18, 71) are pivotably movably connected together by a coupling member (38).

11. An agricultural harvester according to one or more of the preceding claims **characterised in that** the pivotal movement of a plurality of closure flaps (33) which are arranged in succession in the axial direction (34) of the at least one axial separating rotor (18, 71) is coupled together by way of at least one pivoting mechanism (76) in such a way that the closure flaps (33) successively close the separating surface (25) from the front end of the at least one axial separating rotor (18, 71) in the axial direction (34) and open them again in the reverse order.

12. An agricultural harvester according to one or more of the preceding claims **characterised in that** the coupling members (38) of the closure flaps (33) which are arranged in mutually adjacent relationship in the peripheral direction of the at least one axial separating rotor (18, 71) are guided in slot guides (49, 50) of a pivoting mechanism (76), wherein by displacement of the slot guides (49, 50) of the pivoting mechanism (76) the coupling members (38) perform a pivotal movement in the peripheral direction of the at least one axial separating rotor (18, 71) and in so doing respectively pivot the closure flaps (33) connected thereto from the closure position (63) into the passing position (70) and vice-versa.

13. An agricultural harvester according to claim 12 **characterised in that** the slot guides (49, 50) are connected to at least one adjusting means (60, 61) by way of at least one pull linkage (53), wherein the adjusting means (60, 61) displaces the slot guides (49, 50) in the axial direction (34) of the at least one axial separating rotor (18, 71).

14. An agricultural harvester according to one or more of the preceding claims **characterised in that** the coupling members (38) of the closure flaps (33) which are arranged in mutually adjacent relationship in the peripheral direction of the at least one axial separating rotor (18, 71) are guided in slot guides (75) of a coupling mechanism (76), wherein the slot guides (75) are arranged pivotably about an axis (74) extending in the axial direction (34) of the at least one axial separating rotor (18, 71) and during the pivotal movement of the slot guides (75) pivot the closure flaps (33) from the closure position (63) into the passing position (70) and vice-versa.

15. An agricultural harvester according to one or more of the preceding claims **characterised in that** an adjusting means (61) is associated with each coupling member (38) and the adjusting means (61) are actuable as desired.

16. An agricultural harvester according to one or more of the preceding claims **characterised in that** at lest one first axial separating rotor (18, 71) and at least one further axial separating rotor (18, 71) are arranged in mutually adjacent relationship and the coupling mechanism (76) of the closure flaps (33) is arranged in the region between the axial separating rotors (18, 71).

17. An agricultural harvester according to one or more of the preceding claims **characterised in that** the closure flaps (33) which are arranged in mutually adjacent relationship in the peripheral direction of the at least one axial separating rotor (18, 71) in the open position (63) open a passage region (77) whose cross-section increases in the radial direction.

18. An agricultural harvester according to one or more of the preceding claims **characterised in that** the displacement of the earliest separation region (67) of the separation surface (25) occurs in dependence on the impurities separation at the separation surface (25).

19. An agricultural harvester according to claim 18 **characterised in that** there are provided means (79) for sensing the impurities separation in the crop material flow (78) separated off at the separation surface (25), the measurement signal (80) of which generates in a control unit (81) an output signal (82) for automatic displacement of the earliest separation region (67) of the separation surface (25).

## Revendications

1. Machine agricole de récolte équipée de moyens destinés à détacher les infrutescences du produit agricole de récolte et à les séparer du produit de récolte, le détachement des infrutescences du produit agricole et une séparation partielle se produisant dans une zone de battage formée par des organes de battage et cette zone de battage étant suivie d'au moins une zone de séparation destinée à dissocier et séparer les infrutescences, **caractérisée en ce que** la zone de séparation (32, 73) est formée d'au moins un rotor de séparation axial (18, 71), ce rotor de séparation axial (18, 71), au nombre d'au moins un, étant entouré au moins partiellement par une surface de séparation (25) dont la première- zone de séparation (67) peut être déplacée dans la direction axiale (34) du rotor de séparation axial (18, 71), au nombre d'au moins un.

2. Machine agricole de récolte selon la revendication 1, **caractérisée en ce que** le déplacement de la première zone de séparation (67) du rotor de séparation axial (18, 71), au nombre d'au moins un, s'opère par une fermeture au moins partielle de la surface de séparation (25).

3. Machine agricole de récolte selon une ou plusieurs des revendications précédentes, **caractérisée en ce que** la zone de battage (31) est formée par un mécanisme de battage tangentiel (7), et la zone de séparation (32) est formée par le rotor de séparation axial (18), au nombre d'au moins un.

4. Machine agricole de récolte selon une ou plusieurs des revendications précédentes, **caractérisée en ce que** la zone de battage (72) et la zone de séparation (73) sont formées d'au moins un rotor de battage et de séparation axial (71), la zone de séparation (73) étant formée par le rotor de séparation axial (18), au nombre d'au moins un.

5. Machine agricole de récolte selon une ou plusieurs des revendications précédentes, **caractérisée en ce que** la surface de séparation (25) enveloppant au moins partiellement le rotor de séparation axial (18, 71), au nombre d'au moins un, est construite de manière segmentée dans la direction axiale (34) du rotor de séparation axial (18, 71), au nombre d'au moins un.

6. Machine agricole de récolte selon la revendication 5, **caractérisée en ce qu'**au moins une partie des segments (26 à 29) de la surface de séparation (25) peut être fermée dans un ordre successif et peut être ouverte dans l'ordre inverse.

7. Machine agricole de récolte selon la revendication 6, **caractérisée en ce que** la fermeture successive de plusieurs segments (28, 29) de la surface de séparation (25) commence toujours par le segment (29) voisin de la zone d'introduction (14) du rotor de séparation axial (18, 71), au nombre d'au moins un.

8. Machine agricole de récolte selon une ou plusieurs des revendications précédentes, **caractérisée en ce que** la surface de séparation (25), dans la direction circonférentielle du rotor de séparation axial (18, 71), au nombre d'au moins un, est associée à une pluralité de volets de fermeture (33) pivotants, adjacents les uns aux autres, ces volets de fermeture (33), dans leur position de fermeture (63), fermant de manière sensiblement complète la zone de la surface de séparation (25) qui est recouverte par les volets de fermeture (33).

9. Machine agricole de récolte selon une ou plusieurs des revendications précédentes, **caractérisée en ce qu'**il est prévu dans la direction axiale du rotor de séparation axial (18, 71), au nombre d'au moins un, une pluralité de volets de fermeture (33) pivotants et **en ce que** chacun de ces volets de fermeture (33) pivotants est associé, dans la direction circonférentielle du rotor de séparation axial (18, 71), au nombre d'au moins un, à une pluralité de volets de fermeture (33) pivotants, adjacents les uns aux autres, ces volets de fermeture (33), dans leur position de fermeture (63), fermant de manière sensiblement complète la zone de la surface de séparation (25) qui est recouverte par les volets de fermeture (33).

10. Machine agricole de récolte selon une ou plusieurs des revendications précédentes, **caractérisée en ce que** les volets de fermeture (33) adjacents les uns aux autres dans la direction circonférentielle du rotor de séparation axial (18, 71), au nombre d'au moins un, sont reliés ensemble de manière articulée par un organe de couplage (38).

11. Machine agricole de récolte selon une ou plusieurs des revendications précédentes, **caractérisée en ce que** le mouvement de pivotement d'une pluralité de volets de fermeture (33) disposés successivement dans la direction axiale du rotor de séparation axial (18, 71), au nombre d'au moins un, est couplé par au moins un mécanisme de pivotement (76) de telle manière que les volets de fermeture (33) ferment successivement la surface de séparation (25) à partir de l'extrémité antérieure du rotor de séparation axial (18, 71), au nombre d'au moins un, et dans la direction axiale (34), et les rouvrent dans l'ordre inverse.

12. Machine agricole de récolte selon une ou plusieurs des revendications précédentes, **caractérisée en ce que** les organes de couplage (38) des volets de fermeture (33) disposés adjacents les uns aux autres dans la direction circonférentielle du rotor de séparation axial (18, 71), au nombre d'au moins un, sont guidés dans des fentes de guidage (49, 50) d'un mécanisme de pivotement (76), le déplacement des fentes de guidage (49, 50) du mécanisme de pivotement (76) imprimant aux organes de couplage (38) un mouvement de pivotement dans la direction circonférentielle du rotor de séparation axial (18, 71), au nombre d'au moins un, et basculant ainsi les volets de fermeture (33) qui leur sont reliés entre la position de fermeture (63) et la position de passage (70), et inversement.

13. Machine agricole de récolte selon la revendication 12, **caractérisée en ce que** les fentes de guidage (49, 50) sont reliées, par l'intermédiaire d'au moins une tige de traction (53), à au moins un moyen de positionnement (60, 61), ce moyen de positionnement (60, 61) déplaçant les fentes de guidage (49, 50) dans la direction axiale du rotor de séparation axial (18, 71), au nombre d'au moins un.

14. Machine agricole de récolte selon une ou plusieurs des revendications précédentes, **caractérisée en ce que** les organes de couplage (38) des volets de fermeture (33) disposés adjacents les uns aux autres dans la direction circonférentielle du rotor de séparation axial (18, 71), au nombre d'au moins un, sont guidés dans des fentes de guidage (75) d'un mécanisme de pivotement (76), les fentes de guidage (75) étant montées de manière pivotante autour d'un axe orienté dans la direction axiale (34) du rotor de séparation axial (18, 71), au nombre d'au moins un, et le pivotement des fentes de guidage (75) commandant ainsi le basculement des volets de fermeture (33) entre la position de fermeture (63) et la position de passage (70), et inversement.

15. Machine agricole de récolte selon une ou plusieurs des revendications précédentes, **caractérisée en ce que** chaque organe de couplage (38) est associé à un moyen de positionnement (61), et **en ce que** les moyens de positionnement (61) peuvent être manoeuvrés à volonté.

16. Machine agricole de récolte selon une ou plusieurs des revendications précédentes, **caractérisée en ce qu'**au moins un premier rotor de séparation axial (18, 71) et au moins un autre rotor de séparation axial (18, 71) sont montés adjacents l'un à l'autre et **en ce que** le mécanisme de couplage (76) des volets de fermeture (33) est disposé dans la zone entre les rotors de séparation axiaux (18, 71).

17. Machine agricole de récolte selon une ou plusieurs des revendications précédentes, **caractérisée en ce que** les volets de fermeture (33) disposés adjacents les uns aux autres dans la direction circonférentielle du rotor de séparation axial (18, 71), au nombre d'au moins un, définissent dans leur position d'ouverture (63) une zone de passage (77) dont la section augmente dans la direction radiale.

18. Machine agricole de récolte selon une ou plusieurs des revendications précédentes, **caractérisée en ce que** le déplacement de la première zone de séparation (67) de la surface de séparation (25) s'opère en fonction de l'extraction d'impuretés au niveau de la surface de séparation (25).

19. Machine agricole de récolte selon la revendication 18, **caractérisée en ce qu'**il est prévu des moyens (79) de détection de l'extraction d'impuretés dans le flux de produit de récolte (78) extrait sur la surface de séparation (25), dont le signal de mesure (80), injecté à une unité de commande (81), produit un signal de sortie (82) destiné au réglage automatique de la première zone de séparation (67) de la surface de séparation (25).
